(19) Europäisches Patentamt

European Patent Office

Office européen des brevets

(11) **EP 0 419 345 B1**

(12) **EUROPEAN PATENT SPECIFICATION**

(45) Date of publication and mention
of the grant of the patent:
**27.12.1996  Bulletin 1996/52**

(51) Int Cl.6: **G11B 5/55**, G11B 33/08

(21) Application number: **90402573.1**

(22) Date of filing: **18.09.1990**

(54) **Magnetic disk storage apparatus with improved vibration resistance**

Magnetplattengerät mit verbesserter Schwingungsfestigkeit

Appareil à disque magnétique avec une résistance améliorée aux vibrations

(84) Designated Contracting States:
**DE FR GB IT**

(30) Priority: **18.09.1989  JP 240198/89**
**19.10.1989  JP 270450/89**
**20.02.1990  JP 37196/90**
**09.03.1990  JP 56422/90**

(43) Date of publication of application:
**27.03.1991   Bulletin 1991/13**

(73) Proprietor: **FUJITSU LIMITED**
**Kawasaki-shi, Kanagawa 211 (JP)**

(72) Inventors:
• **Sugimoto, Masaharu**
**Kawasaki-Shi, Kanagawa 211 (JP)**
• **Aruga, Keiji**
**Hiratsuka-Shi, Kanagawa 259-12 (JP)**
• **Yamada, Tomoyoshi**
**Yokohama-Shi, Kanagawa 221 (JP)**
• **Imamura, Takahiro**
**Fujisawa-Shi, Kanagawa 252 (JP)**
• **Mizoshita, Yoshifumi**
**Tama-Shi, Tokyo 206 (JP)**

(74) Representative: **Joly, Jean-Jacques et al**
**Cabinet Beau de Loménie**
**158, rue de l'Université**
**75340 Paris Cédex 07 (FR)**

(56) References cited:
GB-A- 2 179 421                     US-A- 3 484 760
US-A- 4 812 932

**Description**

BACKGROUND OF THE INVENTION

1. Field of the Invention

The present invention relates to a magnetic disk storage apparatus with a rotary head positioning mechanism, and particularly to a storage apparatus providing a vibration proof structure having improved head positioning accuracy.

2. Description of the Prior Art

The head positioning mechanism - usually called a positioner or actuator - can be either of the linear or of the rotary type. Recently, the rotary type head postioning mechanism has become more widely employed because it can be made more compact in comparison with the linear type. For convenience, the rotary type head positioning mechanism will hereafter be termed as "rotary actuator".

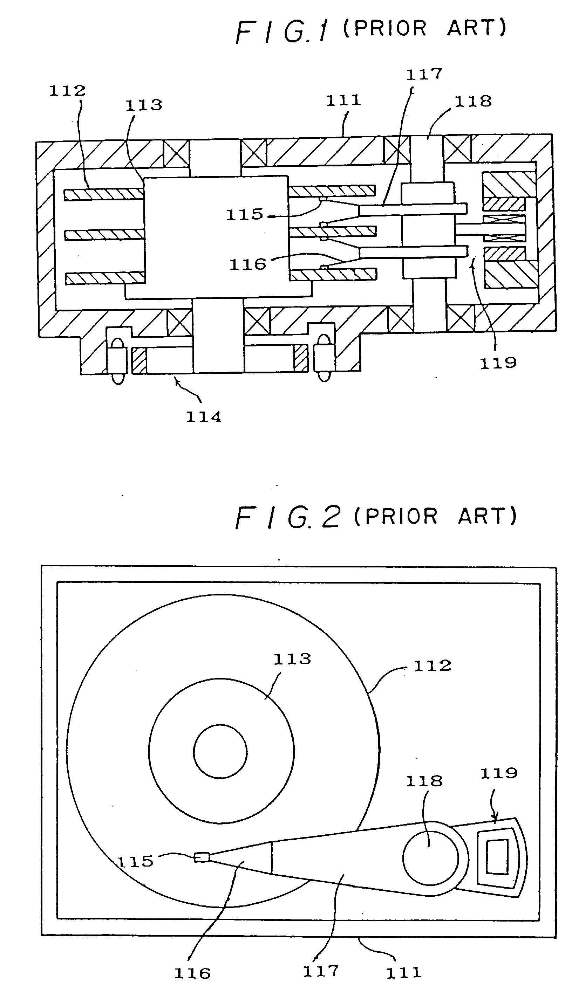

The construction and essential details of a conventional rotary actuator are shown in figures 1 and 2. In these figures, three magnetic disks 112, for example, are rotatably supported by a spindle 113 in a housing 111. These disks 112 are rotated at a constant speed, e.g. 3600 r.p.m. by a spindle motor 114. The magnetic heads 115 are held by head-supporting arms 117 through a suspension spring 116 and are positioned to the designated tracks of the magnetic disks 112 by the rotary actuator.

The rotary actuator has a rotary member 118 which holds the head-supporting arms 117, and is rotatably journaled by the enclosure 111. The rotary actuator is driven by a positioning motor which may e.g. be a voice coil motor 119 that acts to rotate the rotating member 118 so as to displace the magnetic heads 115 by a specified angle about the rotational axis of the rotating member 118. The actuator is balanced between the head arm side and motor side such that its center of gravity passes through the rotational axis of the rotating member 118, to eliminate positioning errors that may occur as a result of vibrations acting along a translational direction.

Moreover, in a magnetic disk storage apparatus designed for high density recording, a closed loop servo is employed for controlling positioning of actuator. This closed loop servo determines an actual position of the magnetic head relative to an original point by reading servo information of the magnetic disk by means of the magnetic head. It then computes the distance the head has to move to reach the designated track position from the actual postion, and drives the positioning motor on the basis of the computed result, whereby the magnetic head is positioned onto the designated track.

In such a rotary actuator type magnetic disk storage apparatus, positioning errors can easily occur by spurious rotary movements generated by external vibrations or impact. In particular, vibrations having a translational component along a plane perpendicular to the disk's rotational axis tend to induce a rotational movement of the enclosure. When such vibrations occur, there is no rotary force applied to the balanced actuator, the latter receiving only translational forces. Accordingly, there will be a difference of movement between the enclosure and the actuator. Therefore, the relative positions of disk and head deviate, generating positioning errors. These errors would appear even if the actuator were unbalanced.

One prior art solution to the problem consists in making the servo gain large in order to reduce such positioning errors, but this approach has only a limited effect. Accordingly, it is generally attempted to act on the mechanical structure of the magnetic disk storage apparatus to attenuate the effects of external vibrations or impacts, by trying to obtain the largest possible attenuation ratio by installing vibration proofing rubber dampers between the enclosure 111 and frame. Thus, a conventional apparatus employs a structure having three or four vibration proofing rubber dampers of suitable spring constant disposed at the side or bottom plane of the enclosure to support the enclosure within the frame.

Such a vibration proof structure has been effective within the practical range for large-size magnetic disk storage apparatus, but has become inadequate for the recent small-size and large-capacity magnetic disk storage apparatus. Indeed, the track pitch is in this case very narrow to achieve the high recording density, and, moreover, the apparatus is prone to vibration or impact, being nowadays installed in small-size computers, such as lap top machines. Furthermore, the apparatus being lightweight, it tends to vibrate at large amplitudes even for small vibrations. Accordingly, the relative position of disk and head is easily deviated by vibrations acting in the translational direction, and head positioning errors are thus easily generated.

For an example of a prior art disk drive corresponding to the preamble of claim 1, reference can be made to US-A-4 812 932.

## SUMMARY OF THE INVENTION

It is the principle object of the present invention to provide a magnetic disk storage apparatus in which the rotary actuator does not generate positioning errors, even when vibrations are applied in the translational direction.

It is another object of the present invention to provide a magnetic disk storage apparatus having a simplified vibration proof mechanism. These objects and other objects are met according to the present invention by magnetic disk storage apparatus comprising, within an enclosure, at least one magnetic disk to be rotated by a rotary drive mechanism and a rotary actuator for positioning a magnetic head to a designated track of said disk by relative displacement therewith; and a frame for fitting said enclosure therein and a plurality of vibration proof supporting members provided between said frame and enclosure; characterized in that said vibration proof supporting members comprise a plurality of resilient members which are displaced from the main axes X, Y passing through the centre of gravity of the enclosure by respective predetermined distances and which have predetermined shear and compression spring contants so as to satisfy the relationship : $\Sigma K_{xi} \cdot Y_i = 0$, $\Sigma K_{yi} \cdot x_i = 0$ wherein the center of gravity is located at the origin (0, 0), the coordinate $(X_i, Y_i)$ denotes the position of the $i^{th}$ vibraton proof supporting member, and each of Kxi, Kyi respectively denote the spring constant in the Y and Y directions, whereby the linear moment around the center of gravity of said enclosure is balanced against the translational vibration input in the plane perpendicular to the rotational axis of said disk, applied through said frame. In other words, the linear moment due to the spring stiffness of each of the vibration proof supporting members is balanced for the centre of gravity of enclosure, so that no rotating moment is generated, even when the enclosure is vibrated (excited) in the translational direction.

## BRIEF DESCRIPTION OF THE DRAWINGS

These and other objects and features of the present invention shall be more clearly understood upon reading the following description of preferred embodiments of the present invention, given with reference to the accompanying drawings in which :

- Figure 1 is a schematic cross-sectional view of an essential portion of a magnetic disk storage apparatus equipped with a conventional rotary actuator according to the prior art;
- Figure 2 is a simplified plan view of the prior art magnetic disk storage apparatus shown in Figure 1;
- Figures 3(A) and 3(B) are diagrams explaining the basic structure and operating principle of the present invention;
- Figure 4 is a partly cut out plan view of the magnetic disk storage apparatus equipped with a rotary actuator, to which the present invention is applied;
- Figure 5 is a partly cut out detailed view of the magnetic disk storage apparatus shown in Figure 4;
- Figure 6 is a plan view showing a first variant of a magnetic disk storage apparatus according to the present invention;
- Figure 7 is a plan view showing a second variant of a magnetic disk storage apparatus according to the present invention, in which the vibration proofing damper configuration is modified;
- Figure 8 is a plan view showing a third variant of a magnetic disk storage apparatus according to the present invention, in which the vibration proofing damper configuration is again modified;
- Figure 9 is a curve of damping ratio versus temperature for the vibration proofing damper configuration of the embodiment shown in Figure 7;
- Figure 10 is a curve of damping ratio versus temperature for the vibration proofing damper configuration of the embodiment shown in Figure 8;
- Figure 11 is a schematic diagram showing the servo control system for the rotary arm of the magnetic disk storage apparatus according to the present invention;
- Figure 12 is a diagram explaining the relative displacement between the disk and head resulting from vibrations in the enclosure generated by a seek reaction force;
- Figure 13 shows the characteristic curves of relationship between relative displacement and the resonance frequency of the supporting (suspension) system of Figure 12;
- Figure 14 indicates the characteristic curves of relationship between servo bandwidth and tracking error rate of servo control system of Figure 11;
- Figure 15 shows the characteristic curves of positioning error/offset margin versus resonance frequency of the supporting system of Figure 12;
- Figure 16 is a diagram showing another example of a magnetic disk storage apparatus of the present invention;
- Figure 17 is a diagram explaining the principle whereby a rotary movement of the enclosure is not generated when the center of gravity of the enclosure coincides with the center of rotation of the drive spindle; and
- Figure 18 shows a double-frame structure for the disk storage unit according to the present invention.

DESCRIPTION OF THE PREFERRED EMBODIMENTS

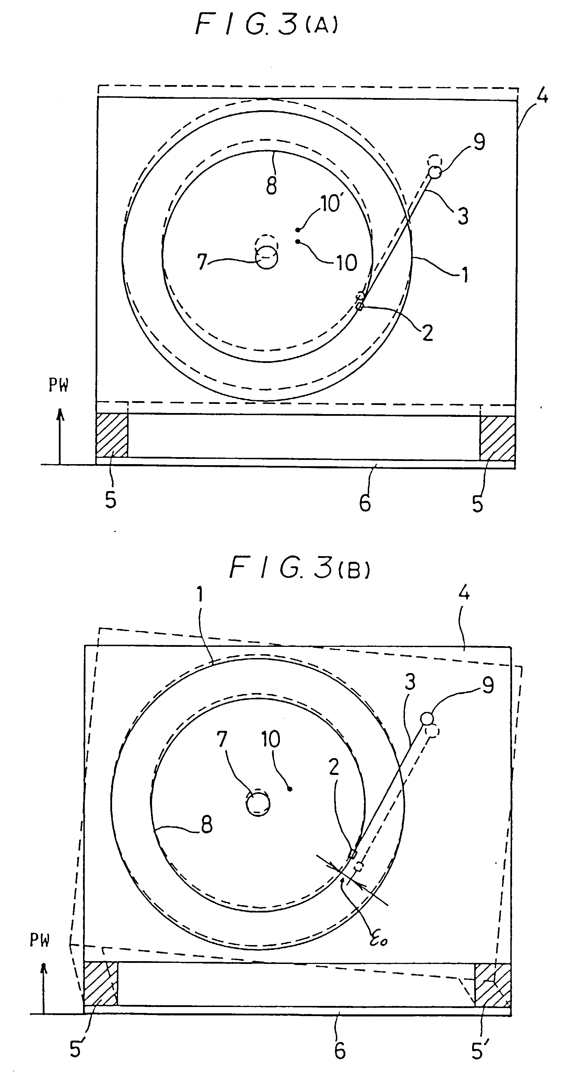

Before describing the details of the inventive vibration control system, the basic principle behind the inventive disk storage apparatus will be explained with reference to Figures 3(A) and 3(B).

In figures 3(A) and 3(B), the reference numerals denote as follows : 7, the center of the drive spindle for rotating a magnetic disk 1; 8, a track on which a magnetic head 2 is located; 9, the center of the rotating axis of the rotary actuator 3; 10′, the center of gravity when the enclosure is translated to the position indicated by a dotted line; 6, the frame; 5, 5′, the vibration proof supporting members.

Figure 3(B) shows the displacements of the movable parts of the apparatus if the vibration proof supporting member 5′ were not provided to balance the primary moment around the center of gravity 10 of enclosure against external vibrations in the translational direction. Under such conditions, the enclosure 4 makes a rotating movement around the center of gravity 10 and, consequently, the rotary actuator 3 moves from the position indicated by the solid line to the position indicated by the dotted line, as a result of the translational forces, so generating a large head positioning error $\varepsilon_0$.

In Figure 3(A), the vibration proof supporting member 5 balances the primary moment, around the center of gravity 10 of the enclosure arising from an external vibration acting in the translational direction. In this case, the enclosure only effects a translational movement. Thus, the center of gravity 10 of enclosure 4 moves to position 10′, and the track of magnetic disk 1 moves to the dotted line position from the parallel solid line, and almost no positioning error is generated.

Embodiments of the present invention based on the basic structure explained above will be now described in detail.

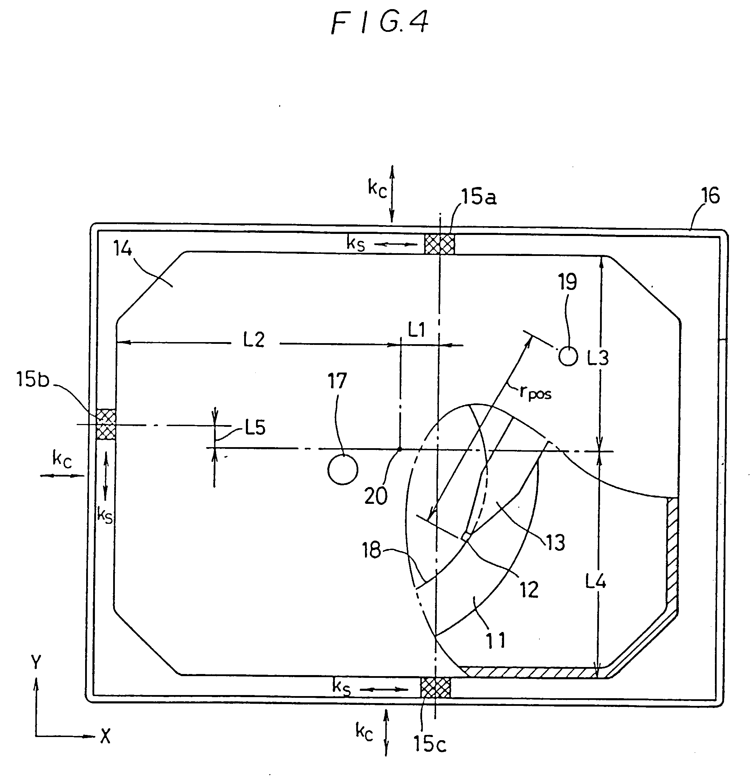

Figure 4 is a partly cut out schematic plan view of a magnetic disk storage apparatus according to a first embodiment. The reference numerals denote as follows : 11, the magnetic disk; 12, the magnetic head; 13, the head arm; 14, the enclosure; 15a, 15b, 15c, vibration proofing dampers serving as the vibration-attenuating suspension members; 16, the frame; 17, the center of the spindle; 18, a track of the disk; 19, the center of the rotation axis of the rotary actuator; and 20, the center of gravity of the enclosure. Also, L1, L5, denote the distance from the center of gravity 20; and $r_{pos}$, the distance from the center of the rotating axis 19 of the actuator to the gap of the magnetic head 12.

The enclosure 14 also comprises a disk driver, such as spindle motor (not illustrated). In addition, three vibration proofing rubber dampers 15a to 15c are provided between the enclosure 14 and the frame 16.

Vibration proofing rubber damper 15a has a spring constant ks along the X-direction and kc along the Y-direction. It is located at position L1 along the X-direction and at position L3 along the Y-direction relative to the center of gravity 20 of enclosure 14. Damper 15b has a spring constant kc along the X-direction and ks along the Y-direction, and is located at position L2 along the X-direction and L5 along the Y-direction relative to the center of gravity 20 of enclosure 14. Damper 15c has spring constants ks along the X-direction and kc along the Y-direction, and is located at position L1 along the X-direction and L4 along the Y-direction relative to the centre of gravity 20 of the enclosure 14.

The distances L1, ... , L5 of the vibration proofing rubber dampers 15a, 15b, 15c relative to the center of gravity 20 of enclosure 14, and respective spring constants ks, kc of the dampers 15a, 15b, 15c are selected to satisfy the following two formulas.

$$L1.kc + L1.kc - L2.ks = 0 \tag{1}$$

$$L3.ks - L5.kc - L4.ks = 0 \tag{2}$$

In this way, the linear moment around the center of gravity 20 can be balanced against the external vibrations acting in the X and Y directions. Accordingly, a rotational comoonent is no longer generated within the enclosure 14, so eliminating the positioning error $\varepsilon_0$.

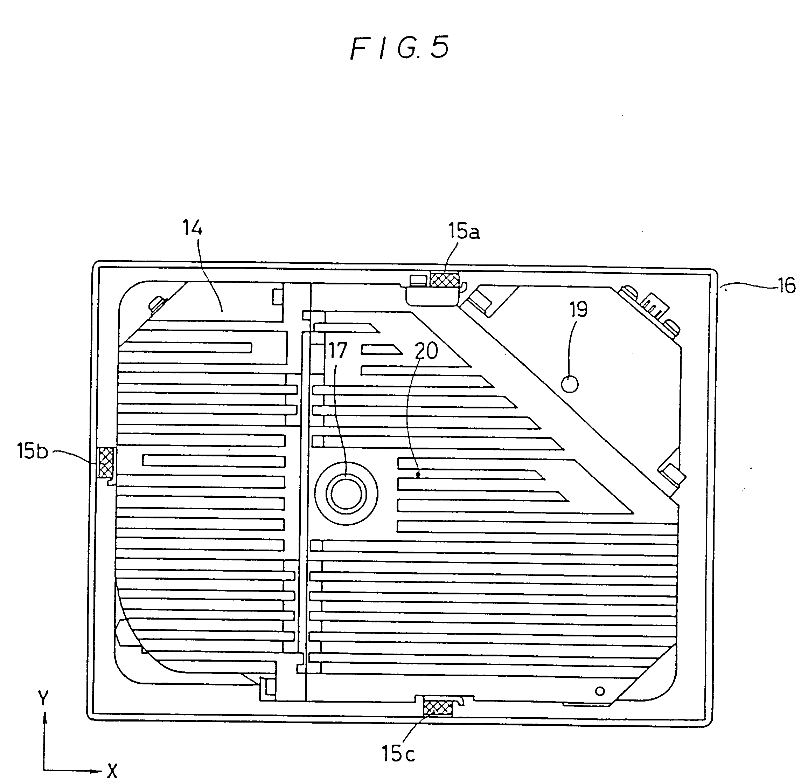

Figure 5 is a detailed plan view of the first embodiment. The reference numerals are the same as in Figure 4. The three vibration proof dampers 15a, 15b, 15c have the spring constants kc in the compressing direction and ks in the shearing direction, and are held by the two metal plates. Their location between the enclosure 14 and frame 16 is determined as explained above, so that the linear moment around the center of gravity 20 of enclosure 14 is balanced. Therefore, as explained in regard to Figure 4, no rotational moment is generated within the enclosure 14 when external vibrations are present, and thus the positioning error $\Sigma_0$ is no longer generated.

Each damoer 15a, 15b, 15c is fixed via metal receiving plates, for example, by fusing the rubber at the time of vulcanization or by using a bonding agent. For each damper, there is provided a first metal receiving plate threaded to the enclosure 14 and a second metal receiving plate threaded to the frame 16.

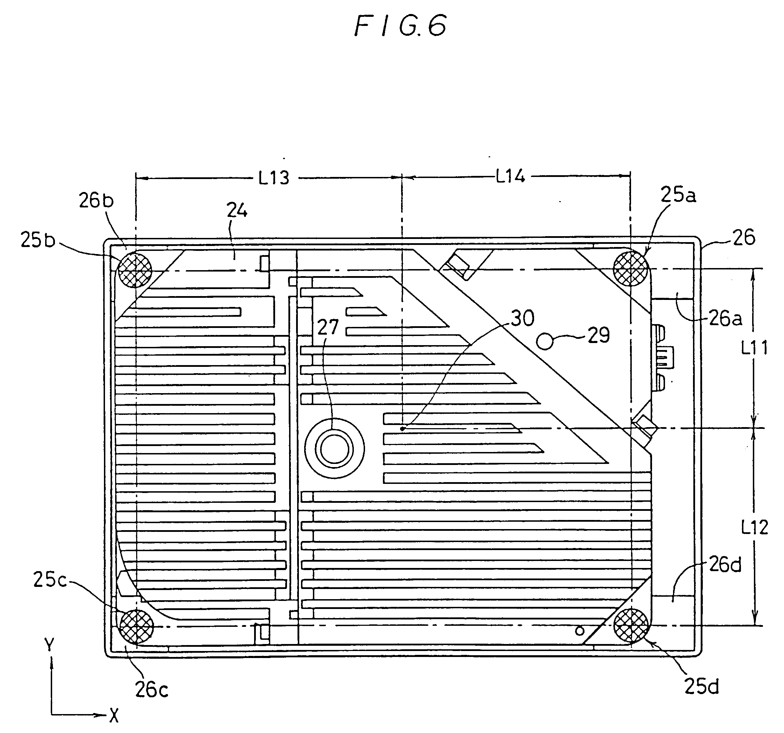

Figure 6 is a plan view of a second embodiment of the present invention. In this figure, the enclosure 24 is attached to fitting portions 26a, ..., 26d at the four corners of frame 26 through four vibration proofing dampers 25a, ..., 25d.

Reference numeral 27 denotes the center of the spindle; 29, the center of rotation of the rotary actuator; and 30, the center of gravity of enclosure 24.

Damper 25 has a spring constant ka along X and Y directions and is located at position L14 along the X-direction and at position L11 along the Y-direction relative to the center of gravity 30 of the enclosure 24. Damper 25b has a spring constant kb along X and Y directions and is located at position L13 along the X-direction and at position L11 along the Y-direction relative to the center of gravity 30 of the enclosure 24. Damper 25c has a spring constant kc along the X and Y directions and is located at position L13 along the X-direction and at position L12 along the Y-direction relative to the centre of gravity 30 of the enclosure 24. Damper 25d has a spring constant kd along the X and Y directions and is located at position L14 along the X-direction and at position L12 along the Y-direction relative to the center of gravity 30 of the enclosure 24.

The four dampers 25a, ..., 25d are specified by selecting the spring constants ka, ..., kd and distances L11, ..., L14 to satisfy the following conditions :

$$L11.ka + L11.kb - L12.kc - L12.kd = 0 \qquad (3)$$

$$L14.ka + L14.kd - L13.kb - L13.kc = 0 \qquad (4),$$

This choice of parameters balances the linear moment around the center of gravity 30 of the enclosure.

The above expressions can be generalized to a system supporting a rigid body by a number (n) of dampers located in a two-dimensional coordinate system with the center of gravity located at the origin (O, O) to yield :

$$\Sigma\, K_{xi}.Y_i = 0, \ \Sigma K_{yi}.x_i = 0$$

Wherein the coordinate $(X_i, Y_i)$ denotes the position of the $i^{th}$ damper, and each of Kxi, Kyi respectively denote the spring constant in the X and Y directions.

With four such dampers 25a, ..., 25d, the enclosure 24 can be supported by the frame 26 in such a manner that no rotational moment M is transmitted to the enclosure 24 when external vibrations are present, and thus head positioning errors $\varepsilon_0$ are effectively eliminated.

If the position of the enclosure 24 relative to the frame 26 is already predetermined, as in the present embodiment, the linear moment around the center of gravity 30 of the enclosure 24 can be balanced against external vibrations by an appropriate choice of spring constants ka, ..., kd of the dampers 25a, ..., 25d.

According to the two above embodiments, the rotational movement of the enclosure can be suppressed by a simplified vibration proof mechanism consisting of a plurality of vibration proof rubbers.

In one variant of the invention, the vibration proof supporting member can consist not only of the aforementioned rubber dampers, but also of other attenuator elements. Moreover, it is also possible to reduce or increase a number of such elements. It is further possible, like in the following modification, to use different kinds of vibration proof supporting members.

For instance, a vibration proof mechanism can be structured by a combination of vibration proofing dampers that have a different temperature behaviour as regards their damping characteristics.

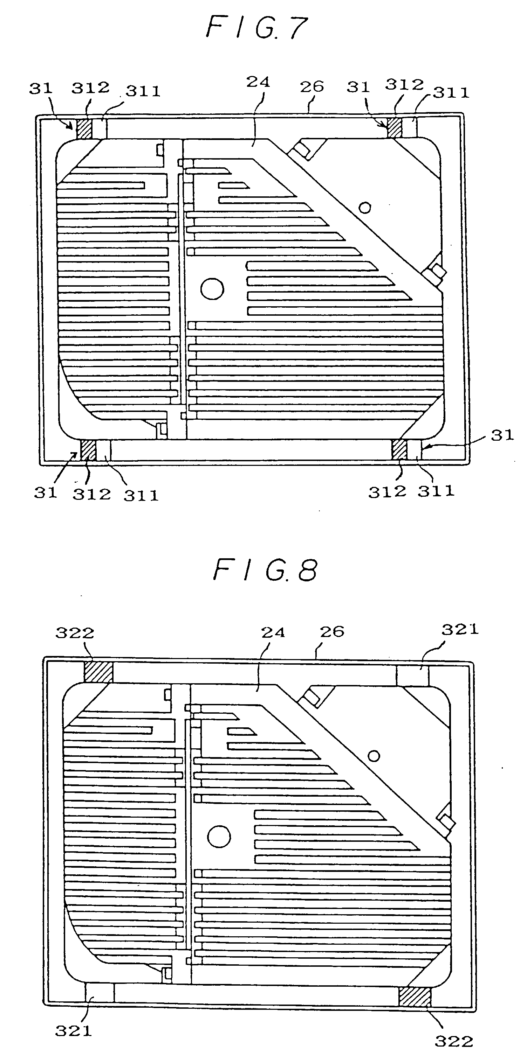

Figure 7 shows an embodiment in which a vibration proofing system is formed by bonding a rubber 311 element having good damping characteristics at the low end of the operating temperature range, to another rubber 312 element having good damping characteristics at the high temperature end of the scale, both elements 311 and 312 being bonded by a bonding agent to form a vibration proof rubber damper 31. The enclosure 24 is then supported by the frame 26 through such vibration proof rubber dampers.

Thus, according to this modification, the enclosure 24 is supported with good damping characteristics by virtue of rubber element 311 and, when the ambient temperature rises to the higher end of the operating temperature range, the enclosure 24 is supported by the good damping characteristics of rubber element 312. Therefore, the vibration damping characteristics of the enclosure 24 can be improved for a wider temperature range. Moreover, an appropriate selection of thickness for each of the rubber elements 311, 312 equalizes the damping characteristics in each temperature within the operating temperature range.

Figure 8 shows another variant of a vibration protection mechanism in which the enclosure 24 is supported by the frame 26 through a vibration proof rubber element 321 that has good damping characteristics at the low end of the operating temperature range, and a vibration proof rubberelement 322 that has good damping characteristics at the high end of the temperature range. According to this modification, since the enclosure 24 is supported with good vibration damping characteristics of rubber element 321 at low temperatures within the operating temperature range, and with good vibration damping characteristics of rubber element 322 at high temperatures, the vibration characteristics of enclosure 24 are improved over a wide temperature range, as in the embodiment of Figure 7.

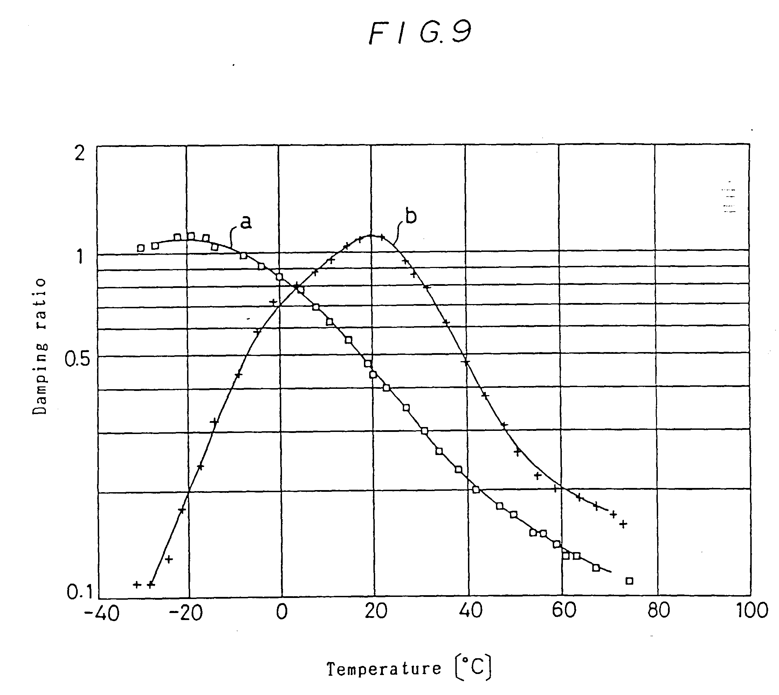

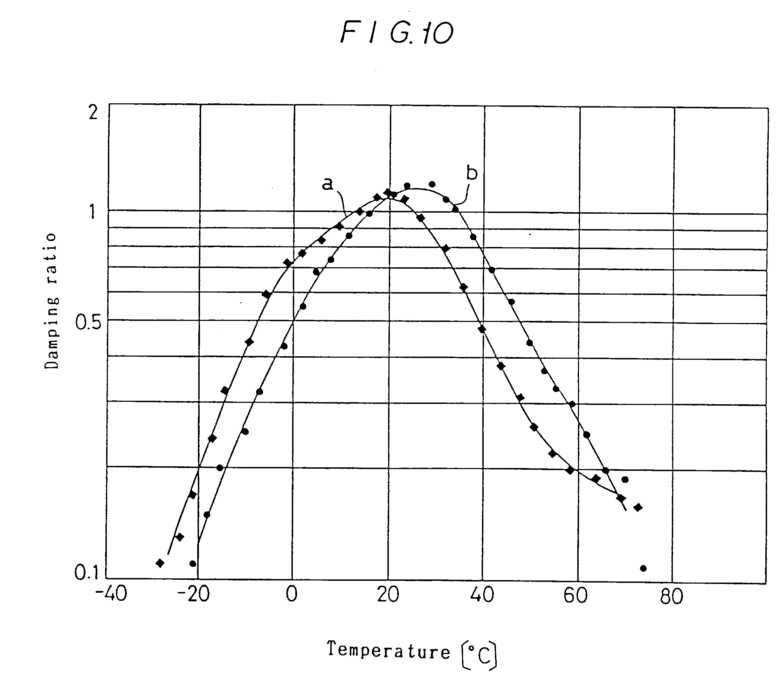

Figure 9 and figure 10 respectively show temperature behaviour of the damping ratios of rubber elements made of different materials. Curve a of figure 9 shows the temperature characteristics of buthyl rubber. It can be seen that this material exhibits a maximum damping ratio loss factor at -20°C. Curve b shows the temperature characteristics of a thermoplastic resin, for example, SOFTOPER (registered trade name of Bridgestone), which exhibits a maximum damping ratio at +20°C. The vibration damping characteristics of the enclosure 24 can be improved in the temperature range of -40°C to +40°C by using such materials for the rubber elements 311 (321), 312 (322) of the embodiments shown in figure 7 and figure 8.

Curve a of figure 10 shows the temperature characteristics of the SOFTOPER thermoplastic resin, which exhibits the maximum damping ratio at 20°C, while curve b shows the temperature characteristic of another thermoplastic resin, for example, H-1 SOFTOPER (registered trade name of Bridgestone), which exhibits a maximum damping ratio at 30°C. The vibration characteristics of the enclosure 24 can be improved for the temperature range of 0°C to 40°C by using such materials for the rubber elements 311 (321), 312 (322) in the embodiments of figure 7 or figure 8.

Other candidate materials for the vibration damping rubber elements include, among others, ISODAMP (registered trade name of EAR) composed of a polymer compound material based on an elastomer agent, or SORBOSEIN (registered trade name) composed of ether polyurethane added with a reinforcing agent and a thermosetting agent to the base of polyole, and MDI. Some of these exhibit their optimum characteristics in the following ranges : 13 to 40°C, 27 to 55°C and 35 to 63°C, etc. . Therefore, it is also possible to combine three or more kinds of materials, each having different temperature characteristics, instead of combining just two, as in the embodiments of figure 7 or figure 8. The anti-vibration characteristics can then be further improved over a wider temperature range.

There will now be described further embodiments that additionally use the vibration proof structure for reducing positioning errors that tend to be generated by the rotational movement of enclosure as a result of the so-called seek reaction force applied to the enclosure when the magnetic head is moved at a high speed.

The rigidity of the vibration proof supporting member must be set high (for a high resonance point of the vibration proof supporting system including the vibration proof supporting member) in order to suppress the self-rotaional movement of the enclosure by such a seek reaction force. However, this introduces a problem inasmuch as most of the external vibrations are then no longer attenuated, but transferred to the enclosure.

This can be solved according to the invention, by using a vibration proofing system which allows a certain degree of rotational movement of the enclosure itself while suffiently reducing positioning error. As will be explained later, the relationship between positioning error and seek reaction force is analysed and included in the servo characteristic, with the resonant point of the vibration proofing system considered as a variable. From this analysis, it can be understood that there exists a region where the positioning error becomes small. This region lies somewhere between a smaller region and a larger region of a certain range of values containing the resonance frequency of the support system. When the resonance frequency is set to a low value, the positioning error can also be made small. If the resonance frequency is set to the lower region, the relative vibration amplitude of the enclosure and frame becomes large for a seek reaction force or an external disturbance, and - in the worse case - the enclosure makes contact with the frame. However, if the distance between the enclosure and frame is set large, there is a problem in that the apparatus becomes large in size.

To accommodate for the foregoing constraints, the vibration proof effect can be improved by suitably setting the relationship between the servo bandwidth of the servo control system controlling the rotary actuator and the resonance frequency of the supporting system, including the vibration damping supporting members. Specifically, according to the invention, the resonance frequency of the supporting system is at least set to be the outside of range 1/5 to 1/4 of the servo bandwidth. Here the servo bandwidth means the frequency at which the open loop gain becomes 0 dB.

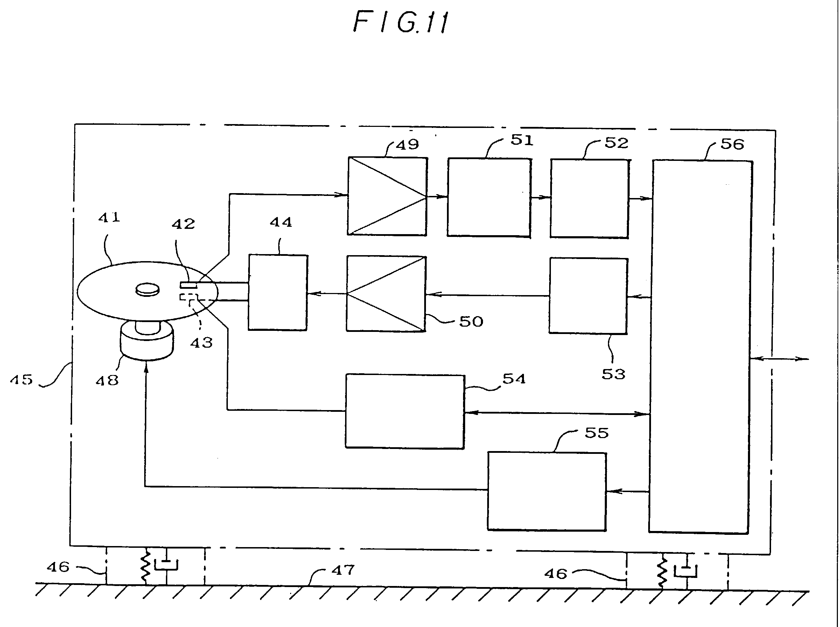

An embodiment incorporating the above features will be explained in detail with reference to figures 11 to 15.

Figure 11 is a schematic diagram showing the mutual relationship between the disk rotating system, head positioning system, servo control system and enclosure supporting system. In this figure, the reference numerals denote as follows : 41, a magnetic disk; 42, a servo head; 43, a data head; 44, a rotary actuator consisting of voice coil motor; 45, the enclosure; 46, the vibration proof supporting member; 47, the frame; 48, a spindle motor; 49, 50 an amplifier; 51, a demodulator for demodulaing a servo signal; 52, an A/D converter; 53, a D/A converter; 54, a read/write control circuit; 55, a motor control circuit, 56, a main controller consisting of a microprocessor, etc.. The above electric circuits are indicated as being provided within the enclosure, but in practice the greater part of them would actually be located outside the enclosure.

The servo control system is formed by the closed loop comprising the servo head 42 - amplifiers 49 - demodulator 51 - A/D converter 52 - main controller 56 - D/A converter 53 - amplifier 50 - rotary actuator 44. The functions of this servo control system being already known, they will not be explained here in further detail. The vibration proof supporting member 46 can be simulated by an equivalent circuit including spring constants and attenuation constants. The supporting system including the above vibration proof supporting member 46 has a resonance frequency $f_{sus}$. Since this

resonance frequency (resonance point of the supporting system) involves the rotary actuator 44, the rotating resonance point becomes a problem.

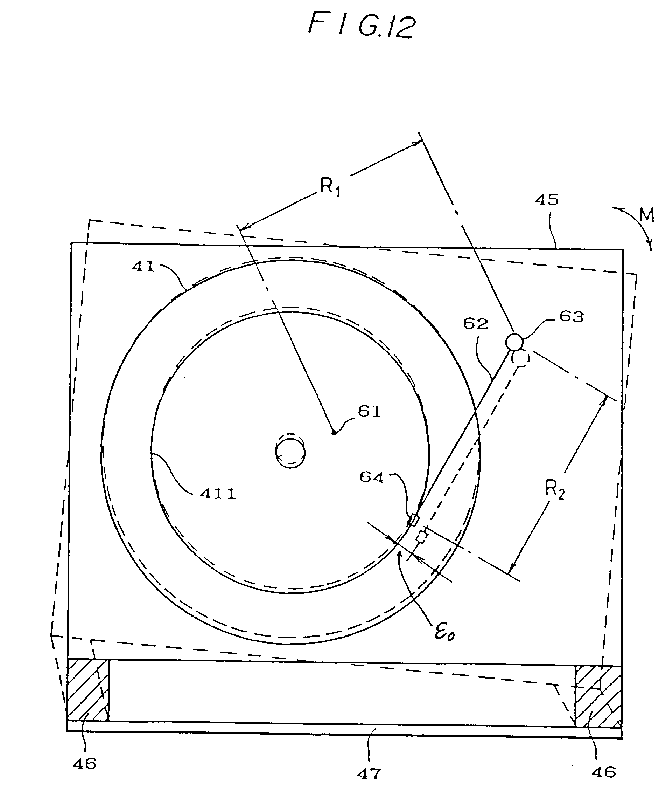

Figure 12 is a diagram for explaining the relative displacement between disk 41 and head 64 due to vibrations in the enclosure generated by the seek reaction force. When a high speed seek operation is repeated by the rotary actuator 44 and the frame 47 is fixed, the enclosure 45 is vibrated as indicated by the arrow mark, because of the rotating moment M due to the seek reaction force. Such vibration imparts a rotating movement to the enclosure 45 that is similar to the consequences of the external translational vibrations. Therefore, when the positioning control is not conducted by the servo control system, the magnetic disk 41 is displaced, together with the enclosure, from the solid line position to the dotted line position, around the center of gravity 61, and the head arm 62 is only translated due to the displacements of the center of rotation 63. Accordingly, the magnetic head 64 ( 42, 43) and the track 411 of the magnetic disk 41 are displaced relative to each other in the radial direction only by the distance $\varepsilon_0$. In practice, since the positioning control is carried out by the servo control system, relative displacement $\varepsilon_0$ can be eliminated. This relative displacement $\varepsilon_0$ corresponds to the potential positioning error.

The relationship between the resonance frequency f sus of the supporting system, including the vibration proof supporting member 46, and relative displacement $\varepsilon_0$ can be expressed by the following formula :

$$20 \log \varepsilon_0 = 20 \log [(J_{pos}.R_1. \alpha max)/(J_{DE}.R_2.8\pi^2\zeta)]$$

$$-40 \log F_{sus} [dB] \tag{5}$$

Where,

$J_{pos} =$     inertial moment of the rotary actuator,
$J_{DE} =$     inertial moment of the enclosure (not including actuator),
$\alpha_{max} =$     maximum acceleration of head,
$\zeta =$     damping ratio of vibration proof supporting member,

$R_1$, $R_2$: distance shown in figure 12.

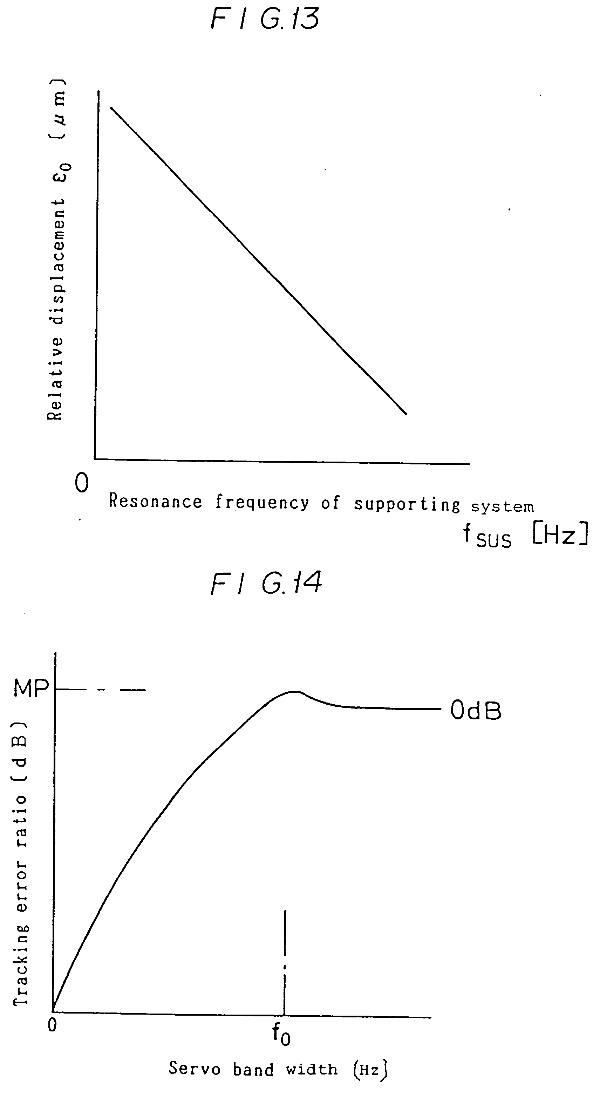

The corresponding curve of the relative displacement versus resonance frequency of the supporting system is shown in figure 13.

In general $(J_{pos}/J_{DE}).(R_1/R_2)$ is between 1/400 and 1/100, $\alpha_{max}$ is between 10 and 100 G and $\zeta$ is about 0.05 to 0.1.

The resonance frequency of the supporting system and the relative displacement shown in figure 13 are in a linear relation when the resonance frequency of the supporting system $f_{sus}$ [Hz] is plotted on the horizontal axis (logarithmic scale), while relative displacement $\varepsilon_0$ [ m] is plotted on the vertical axis (dB scale). This result means that when the vibration proof supporting member 46 is made of a comparatively hard rubber, in order to set the resonance frequency of supporting system $f_{sus}$ to a higher region of the scale, vibration amplitude becomes smaller, and relative displacement $\varepsilon_0$ becomes small. Conversely, when the vibration proof supporting member 15 is formed by a comparatively soft rubber, in order to set the resonance frequency of supporting system $f_{sus}$ to a higher region of the scale, vibration amplitude becomes large and the relative displacement $\varepsilon_0$ also becomes large.

An example of the relationship between the servo bandwidth of servo control system (including the rotary actuator 44) and tracking error rate of servo control system is shown in figure 14. It can be seen that when the servo bandwidth [Hz] is plotted on the horizontal axis (logarithmic scale) and the tracking error rate [dB] is plotted on the vertical axis, the servo bandwidth extends up to the maximum gain MP, which results in the minimum tracking error rate.

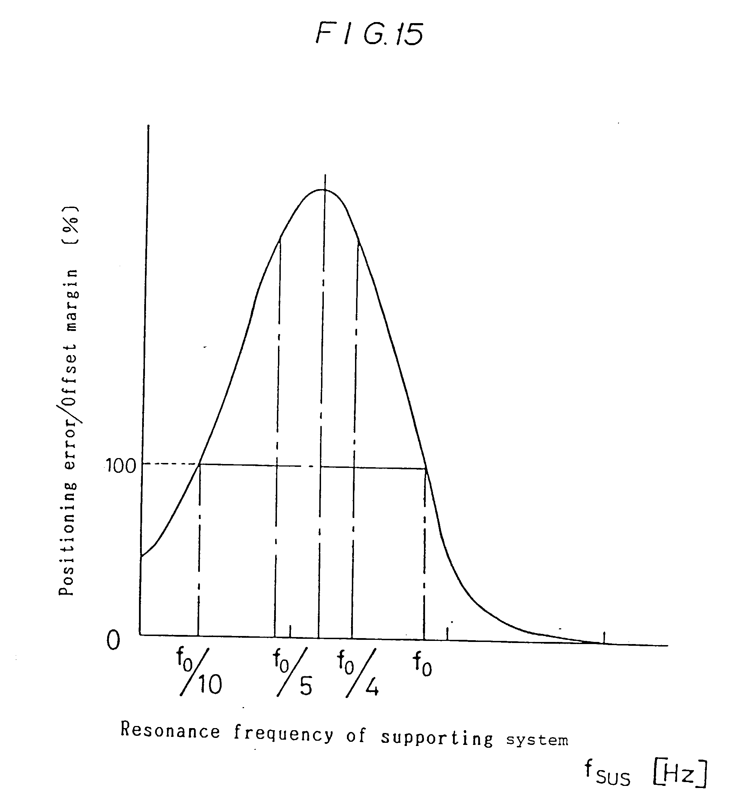

When the resonance frequency $f_{sus}$ of supporting system is set according to the vibration characteristics of the supporting member 46, the vibration-induced rotation angle of the enclosure will be highest (worst case) when the rotation vibration frequency $f_s$ matches the resonance frequency $f_{sus}$ of supporting system. This condition is determined, together with the relative displacement $\varepsilon_0$ in the current track position of the magnetic head 64 (42, 43), from the geometrical conditions using a curve as shown in figure 13. Therefore, a product of relative displacement $\varepsilon_0$ and tracking error ratio is plotted with the resonance frequency $f_{sus}$ [Hz] of the supporting system on the horizontal axis (logarithmic scale). The positioning error [%] is normalized with the maximum positional deviation for reading or writing information (offset margin : 10 to 15% of the ordinary track pitch). In this way, the related curve shown in figure 15 can be obtained. In particular, it has been proved by the inventors that the maximum value of the positioning error is generated in the range of 1/4 to 1/5 of the servo bandwidth $f_0$. When the servo bandwidth $f_0$ is widened, the peak of the positioning error shifts to the right side.

A value of $f_{sus}$ which gives the maximum positioning error changes, as a function of tracking error characteristics, is shown in figure 14. But since the maximal gain Mp in the servo control system is limited to a narrow range by the rule of experience (Hp rule), the shape of the characteristic curve is substantially determined by the servo bandwidth alone, and the positioning error becomes worst in the range of $f_0/5$ to $f_0/4$.

As shown in figure 15, it is sufficient that the resonance frequency $f_{sus}$ of the supporting system (including the vibration proof supporting member 46) is set outside the range of 1/5 to 1/4 of the servo bandwidth $f_0$. In practice, when a margin is considered for high frequency vibrations resulting in tracking errors and the system is given an offset margin ensuring satisfactory read and write operations, the allowable positioning error for vibration discussed here is about 40% for the offset margin. This condition can thus be satisfied by setting $f_{sus}$ to a range lower than $f_0/10$ or higher than $f_0$. Accordingly, the necessary positioning accuracy can be attained without excessively lowering the resonance factor of supporting system.

When it is required to narrow the interval between the enclosure 45 and the frame 47, the frequency $f_{sus}$ can be made higher than $f_0$.

Thus, the vibration damping can be improved for vibration resulting from external forces and seek reaction force without excessively lowering the resonance frequency of the supporting system, including the vibration proof supporting member. As a result, the distance between the enclosure and frame can be narrowed, and accordingly, the apparatus itself can be reduced in size.

A second example of a vibration proof structure according to the invention shall now be explained. This structure does not generate rotational movements in the enclosure even when a slight rotational unbalance is generated in the magnetic disk or spindle.

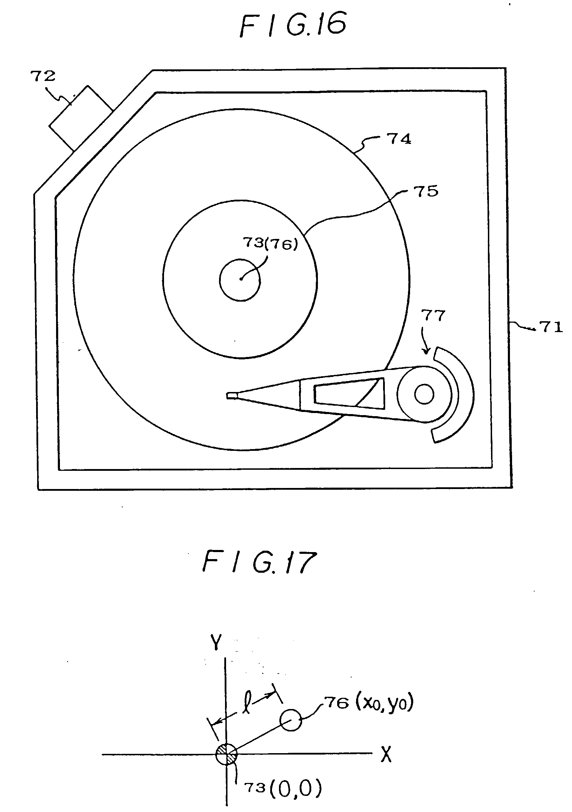

A high rotational speed for the disk is essential for rapid data transfer. Consequently, even if there exists only a slight amount of unbalance in rotation of the disk and spindle in such a high speed disk apparatus, vibration of the enclosure will become a problem, generating the rotational movement component in the enclosure. The second embodiment of the present invention suppresses such rotational movement of enclosure, arising from unbalance in rotation of disk rotating system, by matching of the center of gravity 73 of the enclosure 71 with the center of rotation 76 of the spindle 75. To this end, a weight 72 is attached to the enclosure as shown in figure 16. The principle for preventing the rotational movement in the enclosure 71 when the center of gravity 73 of enclosure 71 matches the rotational center 76 of the spindle 75 will be explained with reference to figure 17. In figure 17, the center of gravity 73 of the enclosure is separated from the center of rotation 76 of the spindle 75. The center of gravity 73 of the enclosure 71 is set as the origin of the coordinates, and the center of rotation 76 of the spindle is given the coordinates $(X_0, Y_0)$. The unbalance in rotation of spindle 75 is designated as $\rho$, and the angular velocity of spindle 75 is designated as $\omega$. In this case, the resulting force F given by the formula

$$F = \rho\omega^2 \qquad (6)$$

This force, applied to the spindle 75 due to unbalance of rotation, is a translational force at the level of the center of rotation 76 of the spindle 75 and its direction changes with the rotation of the spindle 75. Specifically, the following forces are applied along the X and Y axis, in the plane vertical to the axis of the spindle 75.

$$F_x = F \cos \omega t \qquad (7)$$

$$F_y = F \sin \omega t \qquad (8)$$

The resulting torque T, at the axis passing the center of gravity 73 and in a direction parallel to the axis of spindle 75 are applied to the center of gravity 73 (0, 0) of the enclosure 71, along with the translational forces $F_x$, $F_y$.

This torque is expressed as :

$$T = x_0 F_y - y_0 F_x$$

$$= F (x_0 \sin \omega t - y_0 \cos \omega t)$$

$$= F\ell\sin (\omega t + \phi) \qquad (9)$$

Where,

$$\ell = \sqrt{(x_0{}^2 + y_0{}^2)}$$

$$\phi = \tan^{-1} (-y_0/x_0)$$

If the periphery of the enclosure 71 is supported freely and the mass of the enclosure 71 is m, there is an inertial moment J around the axis passing through the center of gravity and parallel to the spindle 75. The displacement ($x_G$, $y_G$) of the center of gravity and the rotational angle are related by the following expressions :

$$x_G = -F_x/(m\omega^2)$$
$$= -F (m\omega^2) \cos\omega t$$
$$= - \rho/m \cos \omega t \qquad\qquad (10)$$

$$y_G = -F_y/(m\omega^2)$$
$$= -F (m\omega^2) \sin\omega t$$
$$= - \rho/m \sin \omega t \quad\dots\dots\dots\dots\dots(11)$$
$$= -T/(J\omega^2)$$
$$= F \ell/(J\omega^2) \sin (\omega t + \phi)$$
$$= - \rho/J \sin (\omega t + \phi) \quad\dots\dots\dots\dots(12)$$

It can thus be understood that the center of gravity 73 describes a circular motion with angular velocity $\omega$ and radius $\rho/m$ and also makes a rotational movement with the swing angle of $2\rho\ell/J$.

Therefore, a rotational movement is generated in the enclosure 71, and a head positioning error is generated as previously explained.

Therefore, in the second example of the present invention, the rotational angle $\theta$ in formula (12) becomes zero when $\ell = 0$. This distance $\ell$ can easily be set to zero in the design stage. In particular, the center of gravity 73 of the enclosure 71 is made to coincide with the center of rotation 76 of the spindle 75 by adding a weight 72 thereto.

It is also possible to match the center of gravity of enclosure 71 with the center of rotation 76 of the spindle 75 in a structure where the side wall of the enclosure 71 lies on the opposite side to the rotary actuator 77, and is made thick. In this case, the weight 72 may be omitted.

According to the second embodiment of the present invention, economical and high precision positioning can be conducted without adjustment of balance of the spindle during the operation. Moreover, component and labor costs in assembling can be reduced drastically. Accordingly, this embodiment provides the advantage of small size, large capacity and high speed magnetic disk storage capacity in an apparatus at a remarkably reduced cost. Therefore, in combination with the first embodiment, a vibration free structure having excellent performance and economical advantage can be obtained. It is of course possible to solely utilize this expansion.

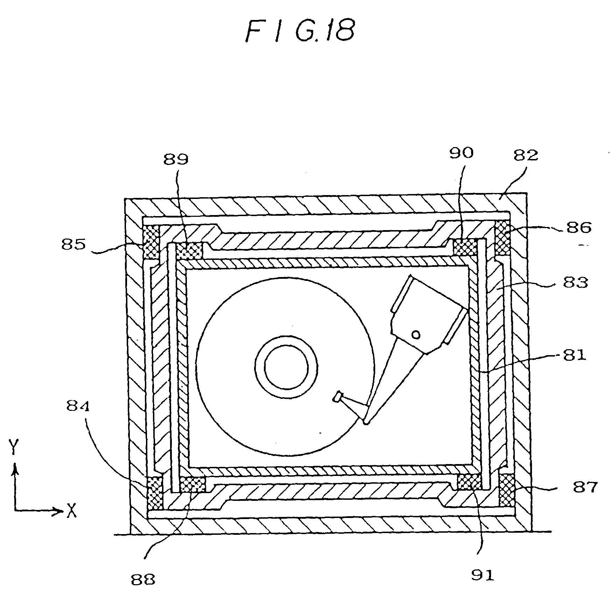

As a variant within the present invention, there is provided a vibration proof structure having a double frame and a plurality of vibration proof supporting members located between the frames and between the enclosure and the frame. Figure 18 shows a plan view of a magnetic disk storage apparatus conforming to such a variant. As shown in this figure, an intermediate frame 83 is provided between the enclosure 81 and external frame 82. The four vibration proof dampers 84 to 87 are provided at the four corners in the interval between the external frame 82 and the intermediate frame 83. Four vibration proof dampers 88 to 91 are also provided between the intermediate frame 83 and enclosure 81. The two pairs of vibration proof dampers are made of rubber. They are flexible in the shearing direction and hard in the compression direction. According to the vibration proof mechanism explained above, the enclosure 81 is flexiby supported in the X-direction for the intermediate frame 83 and in the Y-direction for the external frame 82. Moreover, the enclosure 81 is supported very rigidly in the rotating direction. Therefore, the rotational movement of the enclosure can be made to suppress vibrations arising from a seek reaction force, as well as those arising from external translational vibrations. As a result, relative displacement between the head and disk can be prevented.

**Claims**

1. A magnetic disc storage apparatus comprising, within an enclosure (14; 24; 81), at least one magnetic disk (1; 11) to be rotated by a rotary drive mechanism and a rotary actuator (13; 43) for positioning a magnetic head (2; 64) to a designated track (18; 411) of said disk by relative displacement therewith; and

   a frame (6; 16; 26) for fitting said enclosure therein and
   a plurality of vibration proof supporting members (5a, ..., 5d; 15a, ..., 15d; 25a, ..., 25d; 311, 312; 321, 322) provided between said frame and enclosure;

   characterized in that said vibration proof supporting members (5a, ..., 5d; 15a, ..., 15d; 25a, ..., 25d; 311, 312; 321, 322) comprise a plurality of resilient members which are displaced from the main axes X, Y passing through the centre of gravity of the enclosure by respective predetermined distances and which have predetermined shear and compression spring contants so as to satisfy the relationship :

$$\Sigma K_{xi} \cdot Y_i = 0, \ \Sigma K_{yi} \cdot x_i = 0$$

   wherein the center of gravity is located at the origin (0, 0), the coordinate $(X_i, Y_i)$ denotes the position of the $i^{th}$ vibration proof supporting member, and each of Kxi, Kyi respectively denote the spring constant in the Y and Y directions,
   whereby the linear moment around the center of gravity of said enclosure is balanced against the translational vibration input in the plane perpendicular to the rotational axis of said disk, applied through said frame.

2. A magnetic disk storage apparatus according to claim 1, characterized in that it further comprises a servo control system of the closed loop type for controlling positioning of said rotary actuator (43), the resonance frequency of the supporting system including said vibration proof supporting member being set to lie outside a range of at least 1/5 to 1/4 of the servo band width of said servo control system.

3. A magnetic disk storage apparatus according to claim 1, characterized in that the center of rotation of a spindle (7; 17; 27) supporting the center of said magnetic disk coincides with the center of gravity of said enclosure.

4. A magnetic disk storage apparatus comprising :

   (a) at least one magnetic disk (1; 11) for storing data;
   (b) a rotation drive mechanism (48) for rotating said magnetic disks;
   (c) magnetic heads (2; 12; 22) for writing or reading data to or from the designated track (18; 411) of said disk;
   (d) a rotary actuator (13; 43) for positioning said head to the designated track of said disk through relative movement therewith, said actuator supporting said head, and forming a movable part that can rotate by a determined angle around the center of rotation and having a center of gravity coinciding with the center of rotation axis;
   (e) servo control means of the closed loop type for controlling positioning of said rotary actuator;
   (f) an enclosure (14; 28; 81) accommodating said members in a determined positional relationship whereby thc center of gravity thereof coincides with the rotational axis of said disk;
   (g) a frame (6; 12; 26) for fitting said enclosure; and (h) a plurality of vibration proof supporting members (5a, ..., 5d; 15a,..., 15d; 25a, ..., 25d; 311, 312; 321, 322) for supporting said enclosure with said frame,

   characterized in that said vibration proof supporting members (5a, ..., 5d; 15a,..., 15d; 25a, ..., 25d; 311, 312; 321, 322) comprise a plurality of resilient members which are displaced from the main axes X, Y passing through the centre of gravity of the enclosure by respective predetermined distances and which have predetermined shear and compression spring contants so as to satisfy the relationship :

$$\Sigma K_{Xi} \cdot Y_i = 0, \qquad \Sigma K_{yi} \cdot x_i = 0$$

   wherein the center of gravity is located at the origin (0, 0), the coordinate $(X_i, Y_i)$ denotes the position of the $i^{th}$ vibration proof supporting member, and each of Kxi, Kyi respectively denote the spring constant in the Y and Y directions,

whereby the linear moment around the center of gravity of said enclosure is balanced against the translational vibration input in the plane perpendicular to the rotational axis of said disk, applied through said frame, and in that the resonance frequency of the supporting system including the vibration proof supporting members, is set to lie outside a range at least of 1/5 to 1/4 of the servo bandwidth of said servo control system.

**5.** A magnetic disk storage apparatus according to claims 1, 2, 3 or 4, characterized in that said vibration proof supporting member (5a, ..., 5d; 15a,..., 15d; 25a, ..., 25d; 311, 312; 321, 322) is formed by an elastic material.

**6.** A magnetic disk storage apparatus according to claim 2 or 4, characterized in that the resonance frequency of the supporting system, including said vibration proof supporting members, is set to 1/10 or less of the servo band width of the servo control system.

**7.** A magnetic disk storage apparatus according to claim 2 or 4, characterized in that the resonance frequency of the supporting system including said vibration proof supporting members (5a, ...5d; 15a, ..., 15d; 25a, ..., 25d; 311, 312; 321, 322) is set higher than the servo bandwidth of the servo control system.

**8.** A magnetic disk storage apparatus according to claim 5, characterized in that each vibration proof supporting member (5a, ..., 5d; 15a, ..., 15d; 25a, ..., 25d; 311, 312; 321, 322) is formed of vibration proof rubber.

**9.** A magnetic disk storage apparatus according to claim 8, characterized in that plural pairs of vibration proof supporting members (311, 312; 321, 322) are provided, and each vibration proof supporting member of each pair is formed of vibration proof rubber having different temperature behaviours in their damping characteristics.

**10.** A magnetic disk storage apparatus according to claim 8, characterized in that each vibration proof supporting member joins a plurality of rubber materials having different temperature behaviours in their damping characteristic.

**11.** A magnetic disk storage apparatus according to claim 1, characterized in that said said frame (82, 83) consists of double construction having an outer frame (82) and an inner frame (83) which are mutually supported by a plurality of vibration proof supporting members (84, ..., 87).

**12.** A magnetic disk storage apparatus according to claim 11, characterized in that said enclosure (81) is supported to said inner frame (83) by a plurality of first vibration proof supporting members (88, ..., 90) that are rigid in a first direction and flexible in a second direction, orthogonal to said first direction, and in that said inner frame is supported by said outer frame (82) by a plurality of second vibration proof supporting members (84, ..., 87) that are flexible in said first direction and rigid in said second direction.

**Patentansprüche**

**1.** Magnetplattenspeichergerät, umfassend wenigstens eine innerhalb einer Kapsel (14; 24; 81) angeordnete Magnetplatte (1; 11), die durch einen Drehantriebsmechanismus drehangetrieben wird, und einen Dreh-Stellantrieb (13; 43) zum Positionieren eines Magnetkopfes (2; 64) auf eine vorgegebene Spur (18; 411) dieser Platte durch eine relative Verstellbewegung dieser gegenüber; ferner einen Rahmen (6; 16; 26) zum Aufnehmen der Kapsel und eine Vielzahl von schwingungssicheren Trägerelementen (5a, ..., 5d; 15a, ..., 15d; 25a, ..., 25d; 311, 312; 321, 322), die zwischen diesem Rahmen und der Kapsel angeordnet sind; dadurch **gekennzeichnet**, daß die schwingungssicheren Trägerelemente (5a, ..., 5d; 15a, ..., 15d; 25a, ..., 25d; 311, 312; 321, 322) eine Vielzahl von federnden Elementen umfassen, die von den durch den Schwerpunkt der Kapsel verlaufenden Hauptachsen (X, Y) um jeweils vorgegebene Abstände versetzt angeordnet sind und welche vorgegebene Scherungs- und Kompressionsfederkonstanten haben derart, daß sie die Beziehung erfüllen:

$$\Sigma K_{xi} \cdot Y_i = 0, \ \Sigma K_{yi} \cdot x_i = 0$$

wobei der Schwerpunkt im Ursprung (0,0) angeordnet ist, die Koordinate $(X_i, Y_i)$ die Position des i-ten schwingungssicheren Trägerelementes bezeichnet und jeder Wert $K_{xi}, K_{yi}$ die Federkonstante in der X-Richtung bzw. der Y-Richtung bezeichnet, wodurch das lineare Moment um den Schwerpunkt dieser Kapsel gegen die translatorische Schwingungsübertragung in der Ebene senkrecht zur Drehachse dieser Platte ausgeglichen ist, die über den Rahmen aufgebracht wird.

**2.** Magnetplattenspeichergerät nach Anspruch 1, dadurch **gekennzeichnet**, daß es ferner ein Servo-Steuersystem vom Typ mit geschlossenem Regelkreis zum Steuern der Positionierung des Dreh-Stellantriebes (43) aufweist, wobei die Resonanzfrequenz des Trägersystems einschließlich des schwingungssicheren Trägerelementes so eingestellt ist, daß sie außerhalb eines Bereiches von wenigstens 1/5 bis 1/4 der Servo-Bandbreite des Servo-Steuersystems liegt.

**3.** Magnetplattenspeichergerät nach Anspruch 1, dadurch **gekennzeichnet**, daß das Drehzentrum einer Spindel (7; 17; 27), welche das Zentrum dieser Magnetplatte trägt, mit dem Schwerpunkt der Kapsel zusammenfällt.

**4.** Magnetplattenspeichergerät, umfassend:

(a) wenigstens eine Magnetplatte (1; 11) zum Speichern von Daten;

(b) einen Drehantriebsmechanismus (48) für den Drehantrieb dieser Magnetplatten;

(c) Magnetköpfe (2; 12; 22) zum Schreiben oder Lesen von Daten auf bzw. von der vorgegebenen Spur (18; 411) dieser Platte;

(d) einen Dreh-Stellantrieb (13; 43) zum Positionieren dieses Kopfes auf die vorgegebene Spur dieser Platte durch eine relative Bewegung dieser gegenüber, wobei dieser Stellantrieb den Kopf trägt und ein bewegliches Teil bildet, welches um einen vorgegebenen Winkel um das Drehzentrum herum drehen kann und einen Schwerpunkt hat, welcher mit dem Zentrum der Drehachse zusammenfällt;

(e) Servo-Steuermittel vom Typ mit geschlossenem Regelkreis, zum Steuern der Positionierung des Dreh-Stellantriebes;

(f) eine Kapsel (14; 28; 81), welche diese Elemente in einem vorgegebenen Positionsverhältnis zueinander aufnimmt, durch das der Schwerpunkt derselben mit der Drehachse der Platte zusammenfällt;

(g) einen Rahmen (6; 12; 26) zum Aufnehmen der Kapsel; und

(h) eine Vielzahl von schwingungssicheren Trägerelementen (5a, ..., 5d; 15a, ..., 15d; 25a, ..., 25d; 311, 312; 321, 322) zum Halten dieser Kapsel mittels des Rahmens, dadurch **gekennzeichnet**, daß die schwingungssicheren Trägerelemente (5a, ..., 5d; 15a, ..., 15d; 25a, ..., 25d; 311, 312; 321, 322) eine Vielzahl von federnden Elementen aufweisen, welche von den durch den Schwerpunkt der Kapsel verlaufenden Hauptachsen X, Y um jeweils vorgegebene Abstände versetzt angeordnet sind und welche vorgegebene Scherungs- und Kompressionsfederkonstanten aufweisen derart, daß sie die Beziehung erfüllen:

$$\Sigma K_{xi} \cdot Y_i = 0, \ \Sigma K_{yi} \cdot x_i = 0$$

wobei der Schwerpunkt im Ursprung (0,0) angeordnet ist, die Koordinaten ($X_i$, $Y_i$) die Position des i-ten schwingungssicheren Trägerelementes bezeichnet und jeder der Werte $K_{xi}$, $K_{yi}$ die Federkonstante in der X-Richtung bzw. der Y-Richtung bezeichnet, wodurch das lineare Moment um den Schwerpunkt der Kapsel gegen die translatorische Schwingungsübertragung in der Ebene senkrecht zur Drehachse der Platte ausgeglichen ist, die über den Rahmen aufgebracht wird, und daß die Resonanzfrequenz des Trägersystems einschließlich der schwingungssicheren Trägerelemente so gewählt ist, daß sie außerhalb eines Bereiches wenigstens von 1/5 bis 1/4 der Servo-Bandbreite des Servo-Steuersystems liegt.

**5.** Magnetplattenspeichergerät nach den Ansprüchen 1, 2, 3 oder 4, dadurch **gekennzeichnet**, daß das schwingungssichere Trägerelement (5a, ..., 5d; 15a, ..., 15d; 25a, 25d; 311, 312; 321, 322) durch ein elastisches Material gebildet ist.

**6.** Magnetplattenspeichergerät nach Anspruch 2 oder 4, dadurch **gekennzeichnet**, daß die Resonanzfrequenz des Trägersystems einschließlich der schwingungssicheren Trägerelemente auf 1/10 oder weniger der Servo-Bandbreite des Servo-Steuersystems eingestellt ist.

**7.** Magnetplattenspeichergerät nach Anspruch 2 oder 4, dadurch **gekennzeichnet**, daß die Resonanzfrequenz des Trägersystems einschließlich der schwingungssicheren Trägerelemente (5a, ..., 5d; 15a, ..., 15d; 25a, ..., 25d; 311, 312; 321, 322) höher als die Servo-Bandbreite des Servo-Steuersystems eingestellt ist.

**8.** Magnetplattenspeichergerät nach Anspruch 5, dadurch **gekennzeichnet**, daß jedes schwingungssichere Trägerelement (5a, ..., 5d; 15a, ..., 15d; 25a, ..., 25d; 311, 312; 321, 322) aus schwingungssicherem Gummi ausgebildet ist.

9. Magnetplattenspeichergerät nach Anspruch 8, dadurch **gekennzeichnet**, daß mehrere Paare von schwingungssicheren Trägerelementen (311, 312; 321, 322) vorgesehen sind und daß jedes schwingungssichere Trägerelement jedes Paares aus schwingungssicherem Gummi ausgebildet ist, welcher in seinen Dämpfungseigenschaften unterschiedliches Temperaturverhalten aufweist.

10. Magnetplattenspeichergerät nach Anspruch 8, dadurch **gekennzeichnet**, daß jedes schwingungssichere Trägerelement eine Vielzahl von Gummimaterialien in sich vereinigt, welche in ihren Dämpfungseigenschaften unterschiedliches Temperaturverhalten aufweisen.

11. Magnetplattenspeichergerät nach Anspruch 1, dadurch **gekennzeichnet**, daß der Rahmen (82, 83) aus einer Doppelkonstruktion besteht mit einem Außenrahmen (82) und einem Innenrahmen (83), welche sich gegenseitig durch eine Vielzahl von schwingungssicheren Trägerelementen (84, ..., 87) halten.

12. Magnetplattenspeichergerät nach Anspruch 11, dadurch **gekennzeichnet**, daß die Kapsel (81) vom Innenrahmen (83) über eine Vielzahl von ersten schwingungssicheren Trägerelementen (88, ..., 90) gehalten wird, welche starr in einer ersten Richtung und flexibel in einer zweiten, senkrecht zu der ersten Richtung stehenden Richtung sind, und daß der Innenrahmen von dem Außenrahmen (82) durch eine Vielzahl von zweiten schwingungssicheren Trägerelementen (84, ..., 87) gehalten wird, die flexibel in der ersten Richtung und starr in der zweiten Richtung sind.

**Revendications**

1. Appareil de stockage à disque magnétique comportant, dans une enceinte (14; 24; 81), au moins un disque magnétique (1; 11) devant être entraîné en rotation par un mécanisme d'entraînement en rotation et un dispositif d'actionnement rotatif (13; 43) destiné à positionner une tête magnétique (2; 64) sur une piste désignée (18; 411) dudit disque par un déplacement relatif; et

un châssis (6; 16; 26) destiné à recevoir ladite enceinte et
plusieurs éléments de support anti-vibration (5a, ... 5d; 15a, ... 15d; 25a, ... 25d; 311, 312; 321, 322) prévus entre ledit châssis et ladite enceinte;

caractérisé en ce que lesdits éléments de support anti-vibration (5a, ... 5d; 15a, ... 15d; 25a, ... 25d; 311, 312; 321, 322) comportent plusieurs éléments élastiques qui sont décalés par rapport aux axes principaux X, Y passant par le centre de gravité de l'enceinte sur des distances prédéterminées respectives et qui ont des constantes prédéterminées de cisaillement et de ressort en compression de façon à satisfaire la relation :

$$\Sigma K_{xi}.Y_i = 0, \ \Sigma K_{yi}.x_i = 0$$

où le centre de gravité se trouve à l'origine (0,0), la coordonnée $(X_i, Y_i)$ indique la position du ième élément de support anti-vibration, et chacun des Kxi, Kyi désigne respectivement la constante de ressort dans les directions Y et Y,
le mouvement linéaire autour du centre de gravité de ladite enceinte étant équilibré à l'encontre de l'entrée de vibration en translation dans le plan perpendiculaire à l'axe de rotation dudit disque, appliquée par l'intermédiaire dudit châssis.

2. Appareil de stockage à disque magnétique selon la revendication 1, caractérisé en ce qu'il comporte en outre un système de servocommande du type à boucle fermée destiné à commander le positionnement dudit dispositif d'actionnement rotatif (43), la fréquence de résonance du système de support comprenant ledit élément de support anti-vibration qui est disposé de façon à s'étendre en dehors d'une plage d'au moins 1/5 à 1/4 de la bande passante d'asservissement dudit système de servocommande.

3. Appareil de stockage à disque magnétique selon la revendication 1, caractérisé en ce que le centre de rotation d'une broche (7; 17; 27) supportant le centre dudit disque magnétique coïncide avec le centre de gravité de ladite enceinte.

4. Appareil de stockage à disque magnétique comportant :

(a) au moins un disque magnétique (1; 11) destiné à stocker des données;

(b) un mécanisme d'entraînement en rotation (48) destiné à faire tourner ledit disque magnétique; (c) des têtes magnétiques (2; 12; 22) destinées à écrire ou lire des données sur la piste désignée (18; 411) dudit disque;

(d) un dispositif d'actionnement rotatif (13; 43) destiné à positionner ladite tête sur la piste désignée dudit disque grâce à un déplacement relatif, ledit dispositif d'actionnement supportant ladite tête, et formant une partie mobile qui peut tourner sur un angle déterminé autour du centre de rotation et ayant un centre de gravité qui coïncide avec l'axe de centre de rotation;

(e) des moyens de servocommande du type à boucle fermée destinés à commander le positionnement dudit dispositif d'actionnement rotatif;

(f) une enceinte (14; 24; 81) recevant lesdits éléments dans une relation de position prédéterminée de sorte que le centre de gravité de celle-ci coïncide avec l'axe de rotation dudit disque;

(g) un châssis (6; 16; 26) destiné à recevoir ladite enceinte; et

(h) plusieurs éléments de support anti-vibration (5a, ... 5d; 15a, ... 15d; 25a, ... 25d; 311, 312; 321, 322) destinés à supporter ladite enceinte avec ledit châssis,

caractérisé en ce que lesdits éléments de support anti-vibration (5a, ... 5d; 15a, ... 15d; 25a, ... 25d; 311, 312; 321, 322) comportent plusieurs éléments élastiques qui sont décalés par rapport aux axes principaux X, Y passant par le centre de gravité de l'enceinte sur des distances prédéterminées respectives et qui ont des constantes prédéterminées de cisaillement et de ressort en compression de façon à satisfaire la relation :

$$\Sigma K_{xi} . Y_i = 0, \ \Sigma K_{yi} . x_i = 0$$

où le centre de gravité se trouve à l'origine (0,0), la coordonnée $(X_i, Y_i)$ indique la position du ième élément de support anti-vibration, et chacun des $K_{Xi}$, $K_{Yi}$ désigne respectivement la constante de ressort dans les directions Y et Y,

le mouvement linéaire autour du centre de gravité de ladite enceinte étant équilibré à l'encontre de l'entrée de vibration en translation dans le plan perpendiculaire à l'axe de rotation dudit disque, appliquée par l'intermédiaire dudit châssis,

et en ce que la fréquence de résonance du système de support comprenant les éléments de support anti-vibration, est déterminée de façon à s'étendre en dehors d'une plage d'au moins 1/5 à 1/4 de bande passante d'asservissement dudit système de servocommande.

5. Appareil de stockage à disque magnétique selon les revendications 1, 2, 3 ou 4, caractérisé en ce que ledit élément de support anti-vibration (5a, ... 5d; 15a, ... 15d; 25a, ... 25d; 311, 312; 321, 322) est formé par une matière élastique.

6. Appareil de stockage à disque magnétique selon la revendication 2 ou 4, caractérisé en ce que la fréquence de résonance du système de support, comprenant lesdits éléments de support anti-vibration, est déterminée pour être de 1/10 ou moins de la bande passante d'asservissement du système de servocommande.

7. Appareil de stockage à disque magnétique selon la revendication 2 ou 4, caractérisé en ce que la fréquence de résonance du système de support comprenant lesdits éléments de support anti-vibration (5a, ... 5d; 15a, ... 15d; 25a, ... 25d; 311, 312; 321, 322) est déterminée pour être plus grande que la bande passante d'asservissement du système de servocommande.

8. Appareil de stockage à disque magnétique selon la revendication 5, caractérisé en ce que chaque élément de support anti-vibration (5a, ... 5d; 15a, ... 15d; 25a, ... 25d; 311, 312; 321, 322) est formé en caoutchouc anti-vibration.

9. Appareil de stockage à disque magnétique selon la revendication 8, caractérisé en ce que plusieurs paires d'éléments de support anti-vibration (311, 312; 321, 322) sont prévues, et chaque élément de support anti-vibration de chaque paire est formé en caoutchouc anti-vibration ayant des comportements en température différents sur le plan de leurs caractéristiques d'amortissement.

**10.** Appareil de stockage à disque magnétique selon la revendication 8, caractérisé en ce que chaque élément de support anti-vibration relie plusieurs matières en caoutchouc ayant des comportements en température différents sur le plan de leur caractéristique d'amortissement.

**11.** Appareil de stockage à disque magnétique selon la revendication 1, caractérisé en ce que ledit châssis (82, 83) se compose d'une construction double ayant un châssis extérieur (82) et un châssis intérieur (83) qui sont supportés mutuellement par plusieurs éléments de support anti-vibration (84, ... 87).

**12.** Appareil de stockage à disque magnétique selon la revendication 11, caractérisé en ce que ladite enceinte (81) est supportée sur ledit châssis intérieur (83) par plusieurs premiers éléments de support anti-vibration (88, ... 90) qui sont rigides dans une première direction et flexibles dans une deuxième direction, perpendiculaires à ladite première direction, et en ce que ledit châssis interne est supporté par ledit châssis extérieur (82) par plusieurs deuxièmes éléments de support anti-vibration (84, ... 87) qui sont flexibles dans ladite première direction et rigides dans ladite deuxième direction.

## F I G. 1 (PRIOR ART)

## F I G. 2 (PRIOR ART)

FIG. 3(A)

FIG. 3(B)

# F I G.4

# F I G. 5

# F I G. 6

## F I G. 7

## F I G. 8

# F I G. 9

## F I G. 10

F I G.11

$$F\,I\,G.12$$

## F I G. 13

## F I G. 14

F I G. 15

# F I G.16

# F I G.17

# F I G.18